# EUROPEAN PATENT APPLICATION

(11) **EP 1 204 262 A2**
(43) Date of publication of application: **08.05.2002**
(21) Application number: 01124292.2
(22) Date of filing: 18.10.2001
(51) Int. Cl.: H04M 1/725

(54) **Radio telephone apparatus and method for controlling the number of display colours thereof**

(30) Priority: 01.11.2000 JP 2000334229
(71) Applicant: Kabushiki Kaisha Toshiba, Tokyo 105-8001 (JP)
(72) Inventor: Yamaguchi, Kentoku, Intellectual Property Division, Minato-ku, Tokyo (JP)
(74) Representative: HOFFMANN - EITLE

(57) **Abstract**

A radio telephone apparatus which controls the number of display colors of its display according to the current operation mode and/or the classification of data to be processed so that the electricity consumed by the display can be reduced with the display performance maintained.

## Description

### CROSS-REFERENCE TO RELATED APPLICATIONS

This application is based upon and claims the benefit of priority from the prior Japanese Patent Application No. 2000-334229, filed on November 1, 2000; the entire contents of which are incorporated herein by reference.

### FIELD OF THE INVENTION

The present invention relates to a radio telephone apparatus having a display. The present invention, more particularly, relates to a radio telephone apparatus which can control the number of available display colors according to an operation mode and/or a classification of data to be processed.

### BACKGROUND

Generally, a radio telephone apparatus, such as a cellular phone, has a display which may consist of a liquid crystal display (LCD). The display shows, for a user, information (hereinafter referred to as "state/function information") on an operation state and various functions of the apparatus in addition to transmission data. With the spread of a radio telephone apparatus equipped with a color LCD, a user has recently been able to obtain information of higher utility value.

Each liquid crystal pixel of the color LCD consists of three sub pixels respectively corresponding to red, green, and blue (RGB), so that it can output eight colors by switching on/off each sub pixel. Switching on/off one sub pixel generates two tones for each primary color. Practically, a plurality of tones is preset on a transmittance characteristic curve of a liquid crystal pixel in order to increase the number of tones of each sub pixel. Thereby, each pixel can output hundreds of colors or the full color consisting of 16,700,000 colors, by controlling a driving voltage supplied to a data driving circuit of the LCD.

Thus, in order to increase the number of display colors, a driving voltage generating circuit, which generates many different driving voltages according to the number of display colors with high precision, is needed. However, the consumption of electricity increases in proportion to the number of display colors. For example, a period of time that a cellular phone operating on a battery can be used becomes shorter when the number of available display colors is increased without changing capacities of the battery. Further, in order to obtain a larger capacity, the battery can not but become bigger with spoiling the portability.

Moreover, if the number of display colors is reduced in consideration of an available time period and portability, contents demanding many display colors, such as a dynamic image and a static image, cannot be faithfully displayed because of occurrence of colors which can not be reproduced. Thus, in the conventional cellular phone, increasing the number of display colors can not but sacrifice electricity consumption, and decreasing the number of display colors can not but sacrifice the display performance.

However, most contents actually demand 256 colors at most and a display shown during a standby state demands less. Generally, only the dynamic image and the static image tend to demand the high color (32,000 colors). That is, the minimum number of display colors depends on an operation mode or data classification.

### SUMMARY

In accordance with an embodiment of the present invention, there is provided a radio telephone apparatus connectable with a base station via a radio circuit and having a plurality of operation modes. The apparatus comprises means for transmitting and receiving data, means for recognizing the current operation mode of the apparatus, means for color displaying the data using a predetermined number of display colors, and means for controlling the number of display colors of the displaying means according to the recognized current operation mode.

Also in accordance with an embodiment of the present invention, there is provided a radio telephone apparatus connectable with a base station via a radio circuit. The apparatus comprises means for receiving data, means for recognizing the classification of the received data, means for color displaying the received data using a predetermined number of display colors, and means for controlling the number of display colors of the displaying means according to the recognized classification.

Further in accordance with an embodiment of the present invention, there is provided a method for controlling the number of display colors of a radio telephone apparatus connectable with a base station via a radio circuit and having a plurality of operation modes. The method comprises receiving data, recognizing the current operation mode of the apparatus, showing the data on a display using a predetermined number of display colors, and controlling the number of display colors of the display according to the recognized current operation mode.

Additionally in accordance with an embodiment of the present invention, there is provided a method for controlling the number of display colors of a radio telephone apparatus connectable with a base station via a radio. The method comprises receiving data, recognizing the classification of the received data, showing the received data on a display using a predetermined number of display colors, and controlling the number of display colors of the display according to the recognized classification.

This summary does not necessarily describe all necessary features so that the present invention may also be a sub-combination of these described features.

### BRIEF DESCRIPTION OF THE DRAWINGS

The accompanying drawings, which are incorporated in and constitute section of this specification, illustrate various embodiments and/or features of the invention and together with the description, serve to explain the principles of the invention. In the drawings:
Fig. 1 is a block diagram showing a main configuration of a radio telephone apparatus consistent with an embodiment of the present invention;
Fig. 2 is a block diagram showing the configuration of the display section shown in Fig. 1;
Fig. 3 is a block diagram showing the configuration of the data driving circuit shown in Fig. 2;
Fig. 4 is a block diagram showing the configuration of the driving circuit shown in Fig. 3; and
Fig. 5 is a block diagram showing the configuration of the liquid crystal panel shown in Fig. 2.

### DETAILED DESCRIPTION

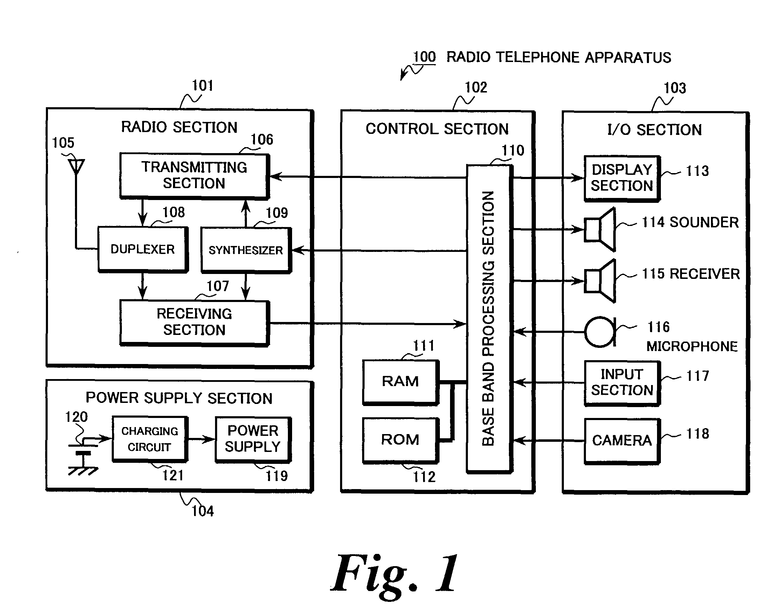

Fig. 1 is a block diagram showing a main configuration of a radio telephone apparatus consistent with a first embodiment of the present invention. The radio telephone apparatus 100 comprises a radio section 101, a control section 102, an input/output (I/O) section 103, and a power supply section 104.

The radio section 101, comprising an antenna 105, a transmitting section 106, a receiving section 107, a duplexer 108, and a synthesizer 109, performs data communication with an external apparatus, such as a base station. The control section 102 comprises a base band processing section 110, a RAM 111, which is a main memory, and a ROM 112 for storing various control programs necessary for the operation of the radio telephone apparatus 100. The base band processing section 110 controls the whole of the radio telephone apparatus 100.

The I/O section 103 comprises a display section 113, a sounder 114, a receiver 115, a microphone 116, an input section 117, and a camera 118. The display section 113, which may consist of an LCD, displays data received by the radio section 101, data inputted by a user through the input section 117, and the state/function information. The sounder 114 informs the user of an arrival of an e-mail. The receiver 115 outputs the voice of a caller. The user can input his/her voice through the microphone 116. The user can also input data, commands, etc. through the input section 117, which comprises two or more keys. Further, the user can input images through the camera 118.

The power supply section 104, which may consist of a DC/DC converter, comprises a power supply 119, which may be a circuit for generating a predetermined power supply voltage from a battery output voltage, a battery 120 such as a lithium battery, and a charging circuit 121. The power supply section 104 supplies electric power to each section of the radio telephone apparatus 100.

Next, the operation of radio circuit communication is explained. When receiving an incoming call, the base station transmits an incoming signal. When the antenna 105 receives the incoming signal, the signal is supplied to the base band processing section 110 via the duplexer 108 and the receiving section 107. After performing signal processing to the signal, the base band processing section 110 transmits, following instructions from the base station, a response signal via the transmitting section 106, the duplexer 108, and the antenna 105.

When receiving a regular response signal, the base station determines a telephone call channel and sends back a channel specifying signal. After performing signal processing to the received channel specifying signal, the base band processing section 110 outputs a control signal to a synthesizer 109 to switch the telephone call channel to the specified one.

When the channel switching is completed and communication via the specified telephone call channel is established, the radio telephone apparatus 100 performs a visible/listenable display. For example, the radio telephone apparatus 100 may inform the user of the arrival of an incoming call by showing to that effect on the display section 113 or outputting a sound indicating the arrival through the sounder 114. Because not so many display colors are needed in such a case, the number of display colors may be limited to 256 or less.

When the user inputs a response, for example, by pushing a telephone call button of the input section 117, the base band processing section 110 connects with a suitable I/O unit of the I/O section 103 according to the current communication mode and starts transmitting and receiving signals via the specified telephone call channel. For example, if the signal is a voice signal, the base band processing section 110 connects with the receiver 115 and the microphone 116. If it is a TV telephone signal, the base band processing section 110 connects with the display section 113 and the camera 118 in addition to the receiver 115 and the microphone 116. In the latter case, the base band processing section 110 controls the display section 113 to increase the number of display colors to the full color which can maintain the display quality of TV telephone picture, for example.

Next, the procedure for performing an outgoing call is explained. The user inputs required information, such as a desirable communication mode and destination, into the base band processing section 110 through the input section 117, for example. The desirable communication mode may include voice communication, e-mail, TV telephone, browsing. And the user inputs a request to perform an outgoing call to the base band processing section 110, by pushing an outgoing call button, for example. Then the base band processing section 110 transmits an outgoing call signal through the transmitting section 106, duplexer 108, and the antenna 105. When receiving a regular outgoing call signal, the base station determines a telephone call channel and sends back a channel specifying signal. After performing signal processing to the received channel specifying signal, the base band processing section 110 outputs a control signal to a synthesizer 109 to switch the telephone call channel to the specified one.

When the channel switching is completed and communication via the specified telephone call channel is established, the network side sends out a ring back signal. At the same time that the telephone call channel is established, the base band processing section 110 connects with a suitable I/O unit of the I/O section 103 according to the current communication mode. For example, if the signal is a voice signal or a TV telephone signal, the base band processing section 110 performs in the same way as that of the incoming call. When browsing Internet contents, the base band processing section 110 connects with the display section 113 and may change the number of display colors according to the contents.

Operation modes of the radio telephone apparatus 100 can be classified as follows, in consideration of the number of display colors demanded by contents:
(1) a dynamic image communication mode for transmitting/receiving dynamic image data;
(2) a static image communication mode for transmitting/receiving static image data;
(3) an e-mail communication mode for transmitting/receiving text data; and
(4) a voice telephone call mode or a standby mode, which hardly need to transmit/receive data to be displayed.

The base band processing section 110 recognizes the current operation mode based on a response from the base station and an extension of received data file. For example, if data is GIF data, the base band processing section 110 controls the display section 113 to display the data using 256 colors, according to the table information stored in its data header section. The base band processing section 110 may memorize each current operation mode of the radio telephone apparatus 100 in a RAM domain, one by one.

Further, while not receiving information necessary for recognizing the current operation mode, the base band processing section 110 recognizes it as the standby mode. The above number in the parenthesis becomes larger, the data volume becomes smaller, in other words, display colors to be reduced by the display section 113 are increased.

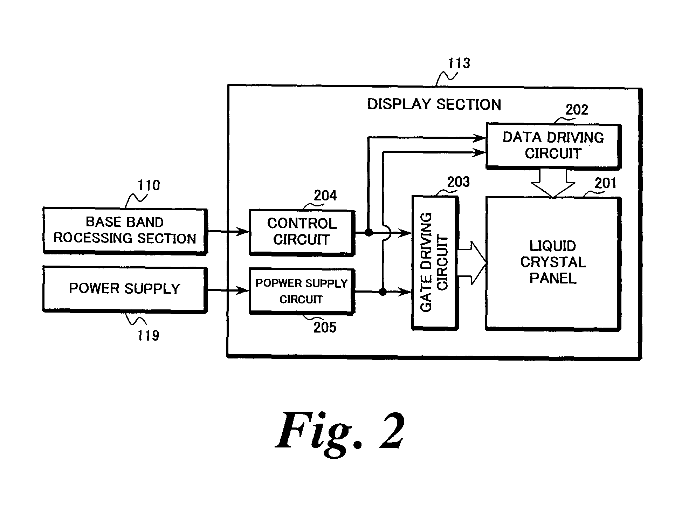

Fig. 2 is a block diagram showing the configuration of the display section 113. The display section 113, which employs a matrix system, comprises a liquid crystal panel 201, a data driving circuit 202, a gate driving circuit 203, a control circuit 204, and a power supply circuit 205. In the matrix system, a plurality of electrodes is arranged on each of the x and y-axes. Each of liquid crystals, which are located on intersection points of these x-electrodes and these y-electrodes, is controlled by applied voltages via a timing line and a data line, respectively.

When a display signal is supplied from the base band processing section 110, the control circuit 204 outputs several information, such as timing necessary for generating a gate signal and a data signal, display colors, and tones, to the data driving circuits 202 and 203. Then, the data driving circuit 202 and the gate driving circuit 203 generate a gate signal and a data signal to drive each pixel of the liquid crystal panel 201 arranged in the shape of a matrix, according to the display signal. The data driving circuits 202 and 203 are respectively supplied with voltages from a power supply 119 through the power supply circuit 205.

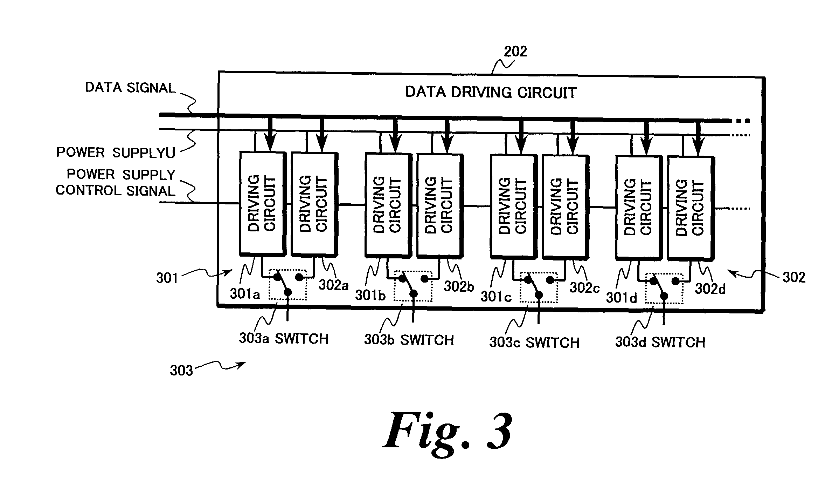

Fig. 3 is a block diagram showing the configuration of the data driving circuit 202. The data driving circuit 202 consists of two driving circuit systems. These driving circuits 301a and 301b, which respectively belong to different driving circuit systems, have a switch 303a, for example. In this case, the number of display colors of the driving circuit 302 is preset fewer than that of the driving circuit 301.

Data signal from the control circuit 204 and the driving voltage from the power supply circuit 205 are supplied to both the driving circuit 301 and the driving circuit 302. The base band processing section 110 controls the power supply according to the current operation mode. That is, when the number of display colors demanded by contents is larger than that preset in the driving circuit 302, the base band processing section 110 drives the driving circuit 301. On the other hand, when the number of display colors demanded by the contents is smaller than that preset in the driving circuit 302, the base band processing section 110 drives the driving circuit 302. There may be three or more driving circuit system so that the number of display colors can be controlled more suitably.

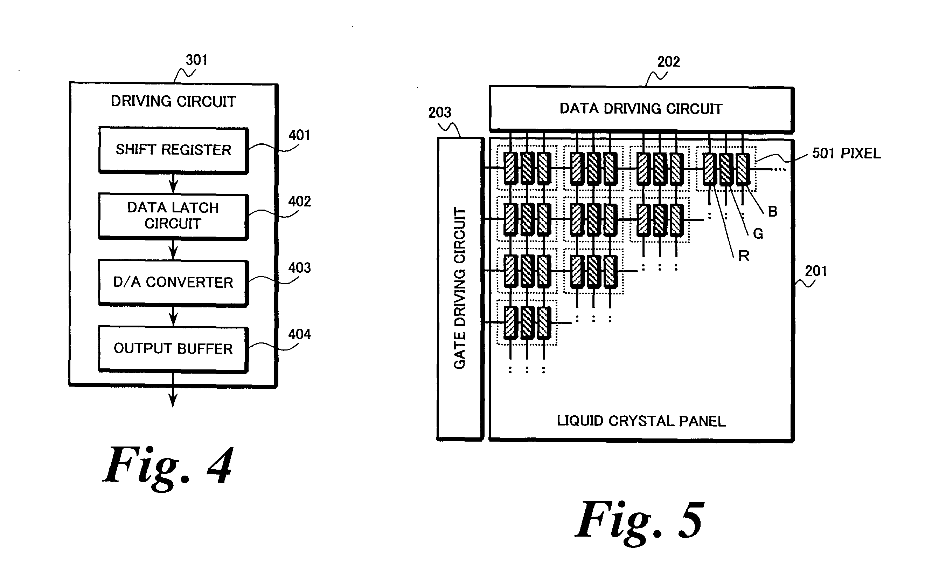

Fig. 4 is a block diagram showing the configuration of the driving circuit 301. As shown in Fig. 4, the driving circuit 301 comprises a shift register 401, a data latch circuit 402, a digital/analog (D/A) converter 403, and an output buffer 404. Data signal inputted into the shift register 401 is temporarily stored in the data latch circuit 402. The D/A converter 403 outputs analog voltage according to the data signal. The outputted analog voltage is stored in the output buffer 404, which may consist of an operational amplifier, and supplied to each corresponding pixel of the liquid crystal panel 201. Thereby, the display section 113 displays data using display colors which are preset in the driving circuit 301.

The constitution of the driving circuit 302 is similar to the similarly to driving circuit 301 except for the number of available display colors, which is fewer than that of the driving circuit 301. The base band processing section 110 switches two driving circuit systems of the data driving circuit 202 to control the number of display colors according to the current operation mode in Fig. 3. However, the resolution of the D/A converter 403 may be controlled to change the number of tones.

Fig. 5 is a block diagram showing the configuration of the liquid crystal panel 201. It is possible to control the number of display colors by paying attention to the sub pixels. That is, as shown in Fig. 5, when the liquid crystal panel 201 comprises a plurality of pixels 501 consisting of three sub pixels corresponding to the primary colors RGB, the display section 113 may suspend voltage output to one or two of the primary colors of each pixel 501 and display data using the remaining primary color(s), according to the current operation mode and/or a classification of data to be displayed. Thereby, the consumption of electricity in the driving circuits 301 and 302 can be reduced to one third or two thirds.

According to this embodiment, the number of display colors of the display section 113 is changed according to an operation mode so that consumption of electricity can be reduced to the minimum, securing the number of display colors required for each operation mode.

This invention is not limited to this embodiment about the number of display colors, the driving method, etc. Moreover, this invention can be combined with other technology, for example, partial displaying in which part of a display section is operated. Further, in this embodiment, an operation mode is automatically recognized and the number of display colors of the display section 113 is controlled. However, the minimum display colors may be available during a standby state. That is, when recognizing the operation mode, the base band processing section 110 informs a user via the display section 113, and the user specifies the number of display colors by selecting it in a menu (a default number is the minimum) through the input section 117. Furthermore, when the numbers of display colors demanded by contents differ according to a screen or a page, each of the contents may be displayed using the maximum display colors demanded by the contents.

## Claims

1. A radio telephone apparatus connectable with a base station via a radio circuit and having a plurality of operation modes, comprising:
means for transmitting and receiving data;
means for recognizing the current operation mode of the apparatus;
means for color displaying the data using a predetermined number of display colors; and
means for controlling the number of display colors of the displaying means according to the recognized current operation mode.

2. The apparatus of claim 1, wherein:
the displaying means comprises a first data driving circuit system configured to output a first number of display colors and a second data driving circuit system configured to output a second number of display colors fewer than the first number; and
the controlling means controls the number of display colors of the displaying means by switching the first and second data driving circuit systems.

3. The apparatus of claim 1, wherein:
the displaying means comprises a data driving circuit having a D/A converter with changeable resolution; and
the controlling means controlling the number of display colors by changing the resolution of the D/A converter.

4. The apparatus of claim 3, wherein:
the controlling means set the minimum resolution to the D/A converter when the recognizing means recognizes the current operation mode as a standby mode.

5. The apparatus of claim 1, wherein:
the displaying means comprises a plurality of pixels, each of the pixels consisting of three sub pixels respectively corresponding to RGB; and
the controlling means controls the number of display colors by suspending the output of one or two of these three sub pixels.

6. The apparatus of claim 5, wherein:
the controlling means suspends the output of the maximum number of these three sub pixels when the recognizing means recognizes the current operation mode as a standby mode.

7. A radio telephone apparatus connectable with a base station via a radio circuit, comprising:
means for receiving data;
means for recognizing the classification of the received data;
means for color displaying the received data using a predetermined number of display colors; and
means for controlling the number of display colors of the displaying means according to the recognized classification.

8. The apparatus of claim 7, wherein:
the displaying means comprises a first data driving circuit system configured to output a first number of display colors and a second data driving circuit system configured to output a second number of display colors fewer than the first number; and
the controlling means controls the number of display colors of the displaying means by switching the first and second data driving circuit systems.

9. The apparatus of claim 7, wherein:
the displaying means comprises a data driving circuit having a D/A converter with changeable resolution; and
the controlling means controlling the number of display colors by changing the resolution of the D/A converter.

10. The apparatus of claim 7, wherein:
the displaying means comprises a plurality of pixels, each of the pixels consisting of three sub pixels respectively corresponding to RGB; and
the controlling means controls the number of display colors by suspending the output of one or two of these three sub pixels.

11. A method for controlling the number of display colors of a radio telephone apparatus connectable with a base station via a radio circuit and having a plurality of operation modes, comprising:
receiving data;
recognizing the current operation mode of the apparatus;
showing the data on a display using a predetermined number of display colors; and
controlling the number of display colors of the display according to the recognized current operation mode.

12. A method for controlling the number of display colors of a radio telephone apparatus connectable with a base station via a radio, comprising:
receiving data;
recognizing the classification of the received data;
showing the received data on a display using a predetermined number of display colors; and
controlling the number of display colors of the display according to the recognized classification.
